# EUROPEAN PATENT APPLICATION

(11) **EP 4 572 307 A1**
(43) Date of publication of application: **18.06.2025**
(21) Application number: 22955798.8
(22) Date of filing: 17.08.2022
(51) Int. Cl.: H04N 9/31, G02B 27/48, G02B 26/08, G02B 19/00, G02B 5/23

(54) **OPTICAL DEVICE AND IMAGE PROJECTION DEVICE COMPRISING SAME**

(71) Applicant: LG Electronics Inc., Yeongdeungpo-gu Seoul 07336 (KR)
(72) Inventor: CHOI, Hoyoung, Seoul 06772 (KR); AHN, Jaehoon, Seoul 06772 (KR); KIM, Eunjin, Seoul 06772 (KR); BOK, Kiso, Seoul 06772 (KR)
(74) Representative: Schornack, Oliver
(86) International application number: PCT/KR2022/012227
(87) International publication number: WO 2024/038921

(57) **Abstract**

An optical device and an image projection apparatus including the same are disclosed. The optical device comprises: a dichroic filter including first and second color areas, the first and second color areas to reflect a portion and another portion of a plurality of colors of light from a first light source device in a first direction, respectively, and the second and first color areas to transmit a portion and another portion of a plurality of colors of light from a second light device, respectively; a diffusion wheel to transmit light incident from the dichroic filter upon rotation; a diffuser to diffuse light from the diffusion wheel; a reflection mirror to reflect light from the diffuser in a second direction; and a flyeye lens between the diffuser and the reflection mirror. Accordingly, it is possible to simplify the configuration of the optical device and to achieve high brightness performance.

## Description

### BACKGROUND

### 1. Field

The present disclosure relates to an optical device and an image projection apparatus including the same, and more particularly to an optical device capable of simplifying the configuration of an optical device and achieving high brightness performance, and an image projection apparatus including the same.

### 2. Description of the Related Art

An image projection apparatus is an apparatus that projects an image to the outside by using an optical device.

In order to achieve high brightness performance of the image projection apparatus, there have been many attempts, such as employing laser diodes capable of high brightness output, and the like.

Korean Laid-Open Patent Publication No. 10-2016-0061373 (hereinafter referred to as "related art") discloses a projector, in which the projector is used to reduce speckle noise.

In the related art, red, green, and blue light sources are used respectively for three panels in order to achieve high brightness performance.

However, the related art has a drawback in that the use of three panels results in a complicated optical configuration. Particularly, the configuration of an optical device becomes complicated.

### SUMMARY

It is an objective of the present disclosure to provide an optical device capable of simplifying the configuration of an optical device and achieving high brightness performance, and an image projection apparatus including the optical device.

It is another objective of the present disclosure to provide an optical device capable of simplifying color separation and synthesis of light from a light source device and achieving high brightness performance, and an image projection apparatus including the optical device.

It is yet another objective of the present disclosure to provide an optical device capable of achieving high brightness performance while effectively reducing speckle noise, and an image projection apparatus including the optical device.

It is yet another objective of the present disclosure to provide an optical device capable of ensuring brightness and uniformity of output light, and an image projection apparatus including the optical device.

In order to achieve the above and other objectives, an optical device and an image projection apparatus including the same according to an embodiment of the present disclosure include: a dichroic filter including a first color area and a second color area, the first color area configured to reflect a portion of a plurality of colors of light from a first light source device in a first direction and the second color area configured to reflect another portion of the plurality of colors of light from the first light source device from the first light source device in the first direction, and the second color area configured to transmit a portion of a plurality of colors of light from a second light device in the first direction and the first color area configured to transmit another portion of the plurality of colors of light from the second light device in the first direction; a diffusion wheel configured to transmit light incident from the dichroic filter upon rotation; a diffuser configured to diffuse light from the diffusion wheel; a reflection mirror configured to reflect light from the diffuser in a second direction; and a flyeye lens disposed between the diffuser and the reflection mirror.

Meanwhile, in the dichroic filter, the first color area may be configured to reflect a first color light, among the plurality of colors of light from the first light source device, in the first direction and the second color area may be configured to reflect a second color light and a third color light, among the plurality of colors of light from the first light source device, in the first direction, and the second color area may be configured to transmit a first color light, among the plurality of colors of light from the second light source device, in the first direction and the first color area may be configured to transmit a second color light and a third color light, among the plurality of colors of light from the second light source device, in the first direction.

Meanwhile, in the dichroic filter, the first color area may be configured to reflect red light from the first light source device in the first direction and the second color area may be configured to reflect blue light and green light from the first light source device in the first direction, and the second color area may be configured to transmit red light from the second light source device in the first direction and the first color area may be configured to transmit blue light and green light from the second light source device in the first direction.

Meanwhile, the red light, blue light, and green light from the first light source device may be output and the green light, blue light, and red light from the second light source device may be output, in a direction from the first color area to the second color area of the dichroic filter.

Meanwhile, the red light, green light, and blue light from the first light source device may be output and the blue light, green light, and red light from the second light source device may be output, in a direction from the first color area to the second color area of the dichroic filter.

Meanwhile, the first color area may be a cyan area, and the second color area may be a red area.

Meanwhile, the optical device may further include: a digital mirror device configured to output a projection image based on light from the reflection mirror; and a plurality of optical lenses configured to output the projection image from the digital mirror device.

Meanwhile, the optical device may further include a Total Internal Reflection (TIR) prism and an actuator disposed between the digital mirror device and the plurality of optical lenses.

Meanwhile, the optical device may further include: a condenser lens disposed between the dichroic filter and the diffusion wheel; and an illumination lens disposed between the flyeye lens and the reflection mirror.

Meanwhile, the optical device may further include a wedge prism disposed between the dichroic filter and the condenser lens.

An optical device and an image projection apparatus including the same according to another embodiment of the present disclosure include: a second dichroic filter including a third color area and a fourth color area, the third color area configured to reflect a portion of a plurality of colors of light from a third light source device in a first direction and the fourth color area configured to reflect another portion of the plurality of colors of light in the first direction, and the fourth color area configured to transmit a portion of a plurality of colors of light from a fourth light source device in the first direction and the third color area configured to transmit another portion of the plurality of colors of light in the first direction; a first condenser lens configured to change a path of light from the dichroic filter; a second condenser lens configured to change a path of light from the second dichroic filter, wherein a diffusion wheel is configured to transmit light incident from the first condenser lens and light incident from the second condenser lens upon rotation.

Meanwhile, the optical device may further include: a first wedge prism disposed between the dichroic filter and the first condenser lens; a second wedge prism disposed between the second dichroic filter and the second condenser lens; and an illumination lens disposed between a flyeye lens and a reflection mirror.

An optical device and an image projection apparatus including the same according to yet another embodiment of the present disclosure include: a dichroic filter including a first color area and a second color area, the first color area configured to transmit a portion of a plurality of colors of light from a first light source device in a first direction and the second color area configured to transmit another portion of the plurality of colors of light in the first direction, and the second color area configured to reflect a portion of a plurality of colors of light from a second light device in the first direction and the first color area configured to reflect another portion of the plurality of colors of light in the first direction; a reflection mirror configured to reflect light incident from the dichroic filter in a second direction; a diffusion wheel configured to transmit light incident from the reflection mirror upon rotation; a diffuser configured to diffuse light from the diffusion wheel; a second reflection mirror configured to reflect light from the diffuser in a third direction opposite the first direction; and a flyeye lens disposed between the diffuser and the second reflection mirror.

Meanwhile, the optical device may further include: a digital mirror device configured to output a projection image based on light from the second reflection mirror; and a plurality of optical lenses configured to output the projection image from the digital mirror device.

Meanwhile, the optical device may further include a Total Internal Reflection (TIR) prism and an actuator disposed between the digital mirror device and the plurality of optical lenses.

Meanwhile, the optical device may further include: a condenser lens disposed between the dichroic filter and the diffusion wheel; and an illumination lens disposed between the flyeye lens and the second reflection mirror.

Meanwhile, the optical device may further include: a second dichroic filter including a third color area and a fourth color area, the third color area configured to transmit a portion of a plurality of colors of light from a third light source device in a first direction and the fourth color area configured to transmit another portion of the plurality of colors of light in the first direction, and the fourth color area configured to reflect a portion of a plurality of colors of light from a fourth light source device in the first direction and the third color area configured to reflect another portion of the plurality of colors of light in the first direction; a first condenser lens configured to change a path of light from the dichroic filter; a second condenser lens configured to change a path of light from the second dichroic filter; and a third condenser lens configured to change a path of light from the first condenser lens and a path of light from the second condenser lens, wherein the reflection mirror may be configured to reflect light, incident from the third condenser lens, in a second direction.

Meanwhile, the second light source device and the fourth light source device may be configured to output light in a same direction.

Meanwhile, the second light source device and the fourth light source device may be configured to output light in opposite directions.

### EFFECTS OF THE DISCLOSURE

An optical device and an image projection apparatus including the same according to an embodiment of the present disclosure include: a dichroic filter including a first color area and a second color area, the first color area configured to reflect a portion of a plurality of colors of light from a first light source device in a first direction and the second color area configured to reflect another portion of the plurality of colors of light from the first light source device from the first light source device in the first direction, and the second color area configured to transmit a portion of a plurality of colors of light from a second light device in the first direction and the first color area configured to transmit another portion of the plurality of colors of light from the second light device in the first direction; a diffusion wheel configured to transmit light incident from the dichroic filter upon rotation; a diffuser configured to diffuse light from the diffusion wheel; a reflection mirror configured to reflect light from the diffuser in a second direction; and a flyeye lens disposed between the diffuser and the reflection mirror. Accordingly, the configuration of the optical device may be simplified, and high brightness performance may be achieved. In addition, color separation and synthesis of light from the light source device may be simplified, and high brightness performance may be achieved. Further, high brightness performance may be achieved while effectively reducing speckle noise.

Meanwhile, in the dichroic filter, the first color area may be configured to reflect a first color light, among the plurality of colors of light from the first light source device, in the first direction and the second color area may be configured to reflect a second color light and a third color light, among the plurality of colors of light from the first light source device, in the first direction, and the second color area may be configured to transmit a first color light, among the plurality of colors of light from the second light source device, in the first direction and the first color area may be configured to transmit a second color light and a third color light, among the plurality of colors of light from the second light source device, in the first direction. Accordingly, the configuration of the optical device may be simplified, and high brightness performance may be achieved. In addition, color separation and synthesis of light from the light source device may be simplified, and high brightness performance may be achieved.

Meanwhile, in the dichroic filter, the first color area may be configured to reflect red light from the first light source device in the first direction and the second color area may be configured to reflect blue light and green light from the first light source device in the first direction, and the second color area may be configured to transmit red light from the second light source device in the first direction and the first color area may be configured to transmit blue light and green light from the second light source device in the first direction. Accordingly, color separation and synthesis of light from the light source device may be simplified, and high brightness performance may be achieved.

Meanwhile, the red light, blue light, and green light from the first light source device may be output and the green light, blue light, and red light from the second light source device may be output, in a direction from the first color area to the second color area of the dichroic filter. Accordingly, color separation and synthesis of light from the light source device may be simplified, and high brightness performance may be achieved.

Meanwhile, the red light, green light, and blue light from the first light source device may be output and the blue light, green light, and red light from the second light source device may be output, in a direction from the first color area to the second color area of the dichroic filter. Accordingly, color separation and synthesis of light from the light source device may be simplified, and high brightness performance may be achieved.

Meanwhile, the first color area may be a cyan area, and the second color area may be a red area. Accordingly, color separation and synthesis of light from the light source device may be simplified, and high brightness performance may be achieved.

Meanwhile, the optical device may further include: a digital mirror device configured to output a projection image based on light from the reflection mirror; and a plurality of optical lenses configured to output the projection image from the digital mirror device. Accordingly, the configuration of the optical device may be simplified, and high brightness performance may be achieved.

Meanwhile, the optical device may further include a Total Internal Reflection (TIR) prism and an actuator disposed between the digital mirror device and the plurality of optical lenses. Accordingly, the configuration of the optical device may be simplified, and high brightness performance may be achieved.

Meanwhile, the optical device may further include: a condenser lens disposed between the dichroic filter and the diffusion wheel; and an illumination lens disposed between the flyeye lens and the reflection mirror. Accordingly, the configuration of the optical device may be simplified, and high brightness performance may be achieved.

Meanwhile, the optical device may further include a wedge prism disposed between the dichroic filter and the condenser lens. Accordingly, the configuration of the optical device may be simplified, and high brightness performance may be achieved.

An optical device and an image projection apparatus including the same according to another embodiment of the present disclosure include: a second dichroic filter including a third color area and a fourth color area, the third color area configured to reflect a portion of a plurality of colors of light from a third light source device in a first direction and the fourth color area configured to reflect another portion of the plurality of colors of light in the first direction, and the fourth color area configured to transmit a portion of a plurality of colors of light from a fourth light source device in the first direction and the third color area configured to transmit another portion of the plurality of colors of light in the first direction; a first condenser lens configured to change a path of light from the dichroic filter; a second condenser lens configured to change a path of light from the second dichroic filter, wherein a diffusion wheel is configured to transmit light incident from the first condenser lens and light incident from the second condenser lens upon rotation. Accordingly, the configuration of the optical device may be simplified, and high brightness performance may be achieved. In addition, color separation and synthesis of light from the light source device may be simplified, and high brightness performance may be achieved.

Meanwhile, the optical device may further include: a first wedge prism disposed between the dichroic filter and the first condenser lens; a second wedge prism disposed between the second dichroic filter and the second condenser lens; and an illumination lens disposed between a flyeye lens and a reflection mirror. Accordingly, the configuration of the optical device may be simplified, and high brightness performance may be achieved.

An optical device and an image projection apparatus including the same according to yet another embodiment of the present disclosure include: a dichroic filter including a first color area and a second color area, the first color area configured to transmit a portion of a plurality of colors of light from a first light source device in a first direction and the second color area configured to transmit another portion of the plurality of colors of light in the first direction, and the second color area configured to reflect a portion of a plurality of colors of light from a second light device in the first direction and the first color area configured to reflect another portion of the plurality of colors of light in the first direction; a reflection mirror configured to reflect light incident from the dichroic filter in a second direction; a diffusion wheel configured to transmit light incident from the reflection mirror upon rotation; a diffuser configured to diffuse light from the diffusion wheel; a second reflection mirror configured to reflect light from the diffuser in a third direction opposite the first direction; and a flyeye lens disposed between the diffuser and the second reflection mirror. Accordingly, the configuration of the optical device may be simplified, and high brightness performance may be achieved. In addition, color separation and synthesis of light from the light source device may be simplified, and high brightness performance may be achieved. Further, high brightness performance may be achieved while effectively reducing speckle noise.

Meanwhile, the optical device may further include: a digital mirror device configured to output a projection image based on light from the second reflection mirror; and a plurality of optical lenses configured to output the projection image from the digital mirror device.

Meanwhile, the optical device may further include a Total Internal Reflection (TIR) prism and an actuator disposed between the digital mirror device and the plurality of optical lenses. Accordingly, the configuration of the optical device may be simplified, and high brightness performance may be achieved.

Meanwhile, the optical device may further include: a condenser lens disposed between the dichroic filter and the diffusion wheel; and an illumination lens disposed between the flyeye lens and the second reflection mirror. Accordingly, the configuration of the optical device may be simplified, and high brightness performance may be achieved.

Meanwhile, the optical device may further include: a second dichroic filter including a third color area and a fourth color area, the third color area configured to transmit a portion of a plurality of colors of light from a third light source device in a first direction and the fourth color area configured to transmit another portion of the plurality of colors of light in the first direction, and the fourth color area configured to reflect a portion of a plurality of colors of light from a fourth light source device in the first direction and the third color area configured to reflect another portion of the plurality of colors of light in the first direction; a first condenser lens configured to change a path of light from the dichroic filter; a second condenser lens configured to change a path of light from the second dichroic filter; and a third condenser lens configured to change a path of light from the first condenser lens and a path of light from the second condenser lens, wherein the reflection mirror may be configured to reflect light, incident from the third condenser lens, in a second direction. Accordingly, the configuration of the optical device may be simplified, and high brightness performance may be achieved. In addition, color separation and synthesis of light from the light source device may be simplified, and high brightness performance may be achieved.

Meanwhile, the second light source device and the fourth light source device may be configured to output light in a same direction. Accordingly, the configuration of the optical device may be simplified, and high brightness performance may be achieved.

Meanwhile, the second light source device and the fourth light source device may be configured to output light in opposite directions. Accordingly, the configuration of the optical device may be simplified, and high brightness performance may be achieved.

### BRIEF DESCRIPTION OF THE DRAWINGS

FIG. 1 is a diagram illustrating the exterior of an image projection apparatus according to an embodiment of the present disclosure.
FIG. 2 is an exemplary internal block diagram of the image projection apparatus of FIG. 1.
FIG. 3 is an exemplary internal block diagram of a signal processing device of FIG. 2.
FIG. 4 is a diagram illustrating an example of a structure of an optical device according to an embodiment of the present disclosure.
FIGS. 5A to 5E are diagrams referred to in the description of FIG. 4.
FIG. 6 is a diagram illustrating an example of a structure of an optical device according to another embodiment of the present disclosure.
FIG. 7 is a diagram illustrating an example of a structure of an optical device according to yet another embodiment of the present disclosure.
FIG. 8 is a diagram illustrating an example of a structure of an optical device according to yet another embodiment of the present disclosure.
FIG. 9 is a diagram illustrating an example of a structure of an optical device according to yet another embodiment of the present disclosure.

### DETAILED DESCRIPTION OF THE PREFERRED EMBODIMENTS

Hereinafter, embodiments of the present disclosure will be described in detail with reference to the accompanying drawings.

The terms "module" and "unit," when attached to the names of components, are used herein to help the understanding of the components, and thus they should not be considered as having specific meanings or roles. Accordingly, the terms "module" and "unit" may be used interchangeably.

An optical device as described in this specification is a device that is capable of outputting visible light. The optical device may be applied to an image projection apparatus. Alternatively, the optical device may also be applied to a lighting apparatus.

Meanwhile, an image projection apparatus as described in this specification is an apparatus that is capable of projecting an image to the outside. For example, the image projection apparatus may be a projector.

Meanwhile, the image projection apparatus as described in this specification may be mounted as a component in another apparatus. For example, the image projection apparatus may be mounted in a mobile terminal. Alternatively, the image projection apparatus may be mounted in an electric home appliance, such as an air conditioner, a refrigerator, a cooking apparatus, or a robot cleaner. Alternatively, the image projection apparatus may also be mounted in a vehicle, such as a car.

Hereinafter, the image projection apparatus will be described in detail.

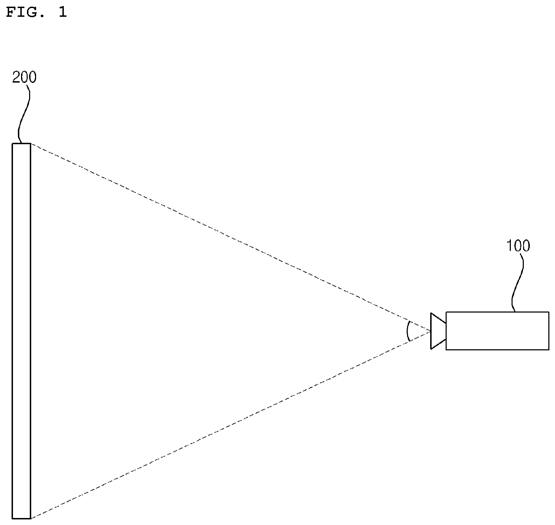

FIG. 1 is a diagram illustrating the exterior of an image projection apparatus according to an embodiment of the present disclosure.

Referring to the drawing, an image projection apparatus 100 may project an image on a screen 200.

In the drawing, an example is illustrated in which the screen 200 has a flat surface but may also have a curved surface.

A user may view the image projected on the screen 200.

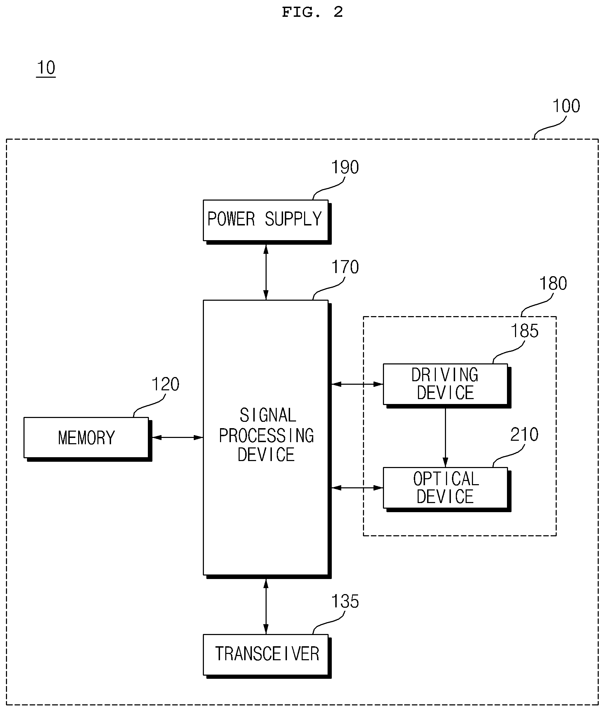

FIG. 2 is an exemplary internal block diagram of the image projection apparatus of FIG. 1.

Referring to the drawing, the image projection apparatus 100 may include a memory 120, a signal processing device 170, a transceiver 135, an image output device 180, and a power supply 190.

Meanwhile, the image output device 180 may include a driving device 185 and an optical device 210.

The driving device 185 may drive the optical device 210, particularly a light source mounted in the optical device 210.

The optical device 210 may include optical elements, such as a light source and a lens, for light output, particularly visible light output.

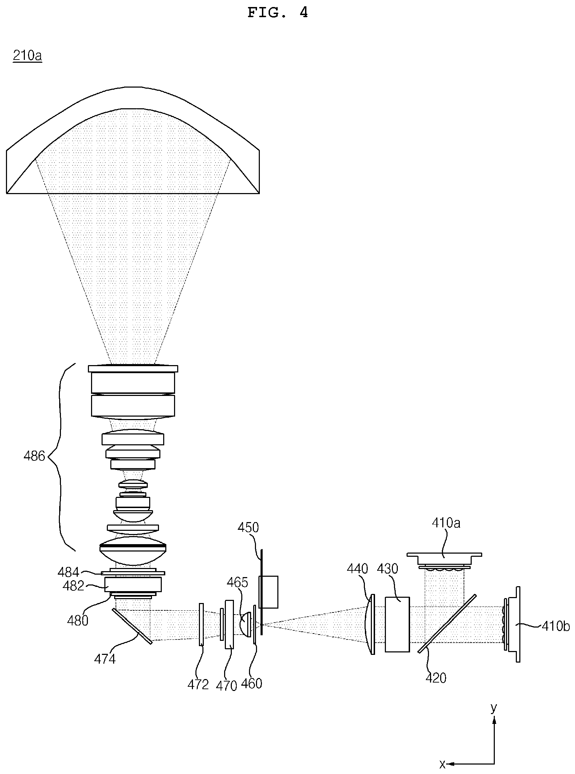

Particularly, the optical device 210 according to an embodiment of the present disclosure may simplify color separation and synthesis of light, which will be described in detail below with reference to FIG. 4 and subsequent figures.

The memory 120 may store programs for processing and control by the signal processing device 170 and may temporarily store input and output data (e.g., still and moving image, etc.).

The transceiver 135 functions as an interface with all external devices connected by wire or wirelessly to the image projection apparatus 100 or a network. The transceiver 135 may transmit data or power, received from the external devices, to each component in the image projection apparatus 100, and may transmit data from the image projection apparatus 100 to the external devices.

Particularly, the transceiver 135 may receive a wireless signal from an adjacent mobile terminal (not shown). Here, the wireless signal may include a voice call signal, a video communication call signal, or various types of data, such as text data and image data, and the like.

To this end, the transceiver 135 may include a short range communication module (not shown). Bluetooth, radio frequency identification (RFID), infrared data association (IrDA), ultra wideband (UWB), ZigBee, or near field communication (NFC) may be used as short range communication technology.

The signal processing device 170 may control the overall operation of the image projection apparatus 100. Specifically, the signal processing device 170 may control the operation of each unit in the image projection apparatus 100.

The signal processing device 170 may control video images stored in the memory 120 or video images received from an external source through the transceiver 135 to be projected to the outside as projected images.

To this end, the signal processing device 170 may control the driving device 185 or the optical device 210 that outputs visible light including red (R), green (G), and blue (B) lights. Specifically, R, G, and B signals corresponding to a video to be displayed may be output to the optical device 210 or the driving device 185.

The power supply 190 may supply external power or internal power to the respective components under the control of the signal processing device 170.

The power supply 190 may supply power to the image projection apparatus 100. Particularly, the power supply 190 may supply power to the image projection apparatus 100 which may be implemented in the form of a system-on-chip (SoC), the image display device 180 for displaying images, and an audio output device (not shown) for audio output.

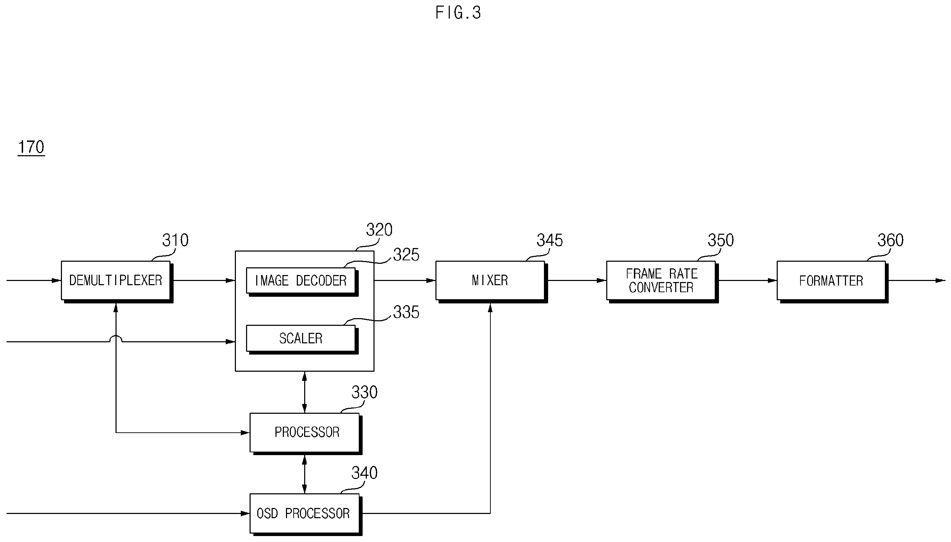

FIG. 3 is an internal block diagram of a controller of FIG. 2.

Referring to the drawing, the signal processing device 170 according to an embodiment of the present disclosure may include a multiplexer 310, an image processor 320, a processor 330, an OSD generator 340, a mixer 345, a frame rate converter 350, and a formatter 360. In addition, the signal processing device 170 may further include an audio processing device (not shown) and a data processing device (not shown).

The demultiplexer 310 may demultiplex an input stream.

The image processor 320 may perform image processing on the demultiplexed image signal. To this end, the image processor 320 may include an image decoder 325 and a scaler 235.

The image decoder 325 may decode the demultiplexed image signal, and the scaler 235 performs scaling so that the resolution of the decoded image signal may be output from the image output device 180. The image decoder 325 may include a decoder of various standards.

The processor 330 may control the overall operation of the image projection apparatus 100 or the signal processing device 170. In addition, the processor 330 may control the operation of demultiplexer 310, the image processor 320, the OSD generator 340, and the like.

The OSD generator 340 generate an OSD signal according to a user input or by itself.

The mixer 345 may mix the OSD signal, generated by the OSD generator 340, with the decoded image signal processed by the image processor 320. The mixed image signal may be provided to the frame rate converter 350.

The frame rate converter (FRC) 350 may convert a frame rate of an input image. Meanwhile, the frame rate converter 350 may output the image as it is without separate conversion of its frame rate.

Meanwhile, the formatter 360 may receive the signal mixed by the mixer 345, i.e., the OSD signal and the decoded image signal, and may perform signal conversion to input the signal to the image output device 180. For example, the formatter 360 may output a low voltage differential signal (LVDS).

Meanwhile, the block diagram of the signal processing device 170 illustrated in FIG. 3 is a block diagram for an embodiment of the present disclosure. Each component of the block diagram may be integrated, added, or omitted according to a specification of the signal processing device 170 actually implemented.

Particularly, the frame rate converter 350 and the formatter 360 may not be provided in the signal processing device 170 but may be separately provided, or may be provided as a single module.

FIG. 4 is a diagram illustrating an example of a structure of an optical device according to an embodiment of the present disclosure.

Referring to FIG. 4, an optical device 210a according to an embodiment of the present disclosure comprises: a first light source device 410a configured to output a plurality of colors of light; a second light source device 410b configured to output a plurality of colors of light in a direction intersecting the first light source device 410a; a dichroic filter 420 configured to reflect a portion of incident light and to transmit another portion of the light; a diffusion wheel 450 configured to transmit light incident from the dichroic filter 420 upon rotation; a diffuser 460 configured to diffuse light from the diffusion wheel 450; a reflection mirror 474 configured to reflect light from the diffuser 460 in a second direction (y direction); and a flyeye lens 470 disposed between the diffuser 460 and the reflection mirror 474.

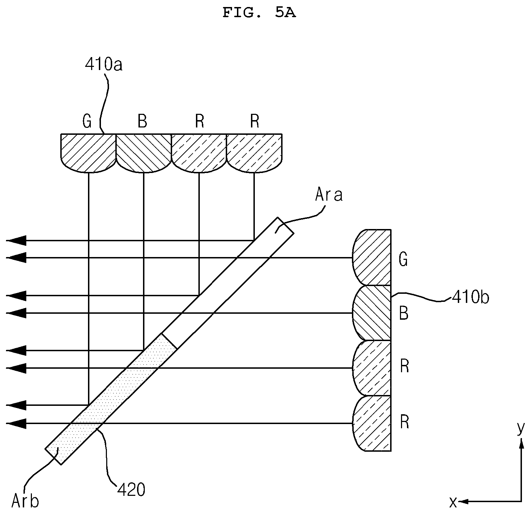

Meanwhile, the dichroic filter 420 includes a first color area Ara (see FIG. 5A) and a second color area Arb (see FIG. 5A), in which the first color area Ara reflects a portion of the plurality of colors of light from the first light source device 410a in a first direction (x direction) and the second color area Arb reflects another portion of the plurality of colors of light in the first direction (x direction), and the second color area Arb transmits a portion of the plurality of colors of light from the second light source device 410b in the first direction (x direction) and the first color area Ara transmits another portion of the plurality of colors of light in the first direction (x direction).

For example, in the dichroic filter 420, the first color area Ara reflects a first color light, among the plurality of colors of light from the first light source device 410a, in the first direction (x direction) and the second color area Arb reflects a second color light and a third color light, among the plurality of colors of light from the first light source device 410a, in the first direction (x direction), and the second color area Arb transmits a first color light, among the plurality of colors of light from the second light source device 410b, in the first direction (x direction) and the first color area Ara transmits a second color light and a third color light, among the plurality of colors of light from the second light source device 410b, in the first direction (x direction). Accordingly, the configuration of the optical device 210 may be simplified, and high brightness performance may be achieved. In addition, color separation and synthesis of light from the light source device may be simplified, and high brightness performance may be achieved.

Specifically, in the dichroic filter 420, the first color area Ara reflects red light from the first light source device 410a in the first direction (x direction) and the second color area Arb reflects blue light and green light from the first light source device 410a in the first direction (x direction), and the second color area Arb transmits red light from the second light source device 410b in the first direction (x direction) and the first color area Ara transmits blue light and green light from the second light source device 410b in the first direction (x direction). Accordingly, color separation and synthesis of light from the light source device may be simplified and high brightness performance may be achieved.

In the optical device 210 according to an embodiment of the present disclosure in which the plurality of color areas Ara and Arb are used, the first color area Ara reflects a portion of the plurality of colors of light from the first light source device 410a in the first direction (x direction) and the second color area Arb reflects another portion of the plurality of colors of light from the first light source device 410a in the first direction (x direction), and the second color area Arb transmits a portion of the plurality of colors of light from the second light source device 410b in the first direction (x direction) and the second color area Arb transmits another portion of the plurality of colors of light from the second light source device 410b in the first direction (x direction).

Particularly, the dichroic filter 420 according to an embodiment of the present disclosure is coated with a plurality of colors and reflects a portion of light and transmits another portion of the light, and the like by using the plurality of color areas Ara and Arb, thereby reflecting or transmitting most of the light output from the first light source device 410a and the second light source device 410b.

Particularly, the dichroic filter 420 does not use polarization characteristics, such that a separate retarder for polarization characteristics and the like may be omitted, thereby simplifying color separation and synthesis of light and achieving high brightness performance. In addition, the number of components in the optical device 210 may be reduced.

Meanwhile, the first light source device 410a and the second light source device 410b may include laser diodes each outputting red light, blue light, and green light.

For example, the first light source device 410a may include four laser diodes outputting red light, red light, blue light, and green light, respectively, in a -y axis direction and the second light source device 410b may include four laser diodes outputting green light, blue light, red light, and red light, respectively, in an x axis direction.

In another example, the first light source device 410a may include four laser diodes outputting red light, red light, green light, and blue light, respectively, in the - y axis direction and the second light source device 410b may include four laser diodes outputting blue light, green light, red light, and red light, respectively, in the x axis direction.

Meanwhile, the diffusion wheel 450 in the optical device 210 according to an embodiment of the present disclosure diffuses light by rotation of a motor and the like, and thus may also be referred to as a dynamic diffuser, and the diffuser 460 diffuses light at a fixed position, and thus may be referred to as a static diffuser.

Speckle noise of light may be reduced by using the diffusion wheel 450 and the diffuser 460.

Particularly, laser speckle noise may be reduced, which may occur when the first light source device 410a and the second light source device 410b are laser diodes.

Meanwhile, by placing the diffusion wheel 450 and the diffuser 460 in the optical device 210 at a focal point of a lens, the size may be minimized and the effect may be maximized.

Meanwhile, the optical device 210 according to an embodiment of the present disclosure may further include: a condenser lens 440 disposed between the dichroic filter 420 and the diffusion wheel 450, and an illumination lens 472 disposed between the flyeye lens 470 and the reflection mirror 474, thereby simplifying the configuration of the optical device 210 and achieving high brightness performance.

Meanwhile, the optical device 210 according to an embodiment of the present disclosure may further include a wedge prism 430 disposed between the dichroic filter 420 and the condenser lens 440, thereby simplifying the configuration of the optical device 210 and achieving high brightness performance.

Particularly, by refracting light using the wedge prism 430, light is focused toward the diffusion wheel 450, thereby reducing speckle noise.

Meanwhile, the optical device 210 according to an embodiment of the present disclosure may further include a collimator lens 465 disposed between the diffuser 460 and the flyeye lens 470.

Meanwhile, by using the collimator lens 465, the condenser lens 440, and the like in the optical device 210 according to an embodiment of the present disclosure, the focused light may be efficiently transmitted without loss, thereby improving light efficiency.

Meanwhile, uniformity may be improved by addressing non-uniformity of light using the flyeye lens 470 in the optical device 210 according to an embodiment of the present disclosure. In addition, the entire size of the optical device 210 may be reduced, and optical efficiency may be improved.

Meanwhile, the optical device 210 according to an embodiment of the present disclosure may further include a digital mirror device 480 configured to output a projection image based on light from the reflection mirror 474, and a plurality of optical lenses 486 configured to output the projection image from the digital mirror device 480. In this case, the plurality of optical lenses 486 may include a projection lens.

Meanwhile, the digital mirror device 480 may include a digital micro-mirror device (DMD).

Accordingly, the digital mirror device 480 has improved light efficiency with little optical loss by the operation of the micro mirror, and has excellent color gamut such that a 4K projection image or 8K projection image may be output.

Meanwhile, the optical device 210 according to an embodiment of the present disclosure may further include a Total Internal Reflection (TIR) prism 482 and an actuator 484 disposed between the digital mirror device 480 and the plurality of optical lenses 486, thereby simplifying the configuration of the optical device 210 and achieving high brightness performance.

FIGS. 5A to 5E are diagrams referred to in the description of FIG. 4.

First, FIG. 5A is a diagram illustrating an example of the first optical device 410a and the second optical device 410b.

Referring to FIG. 5A, the first optical device 410a may include four laser diodes configured to output red light R, red light R, blue light B, and green light G, respectively, in the -y axis direction.

Specifically, the first light source device 410a may include four laser diodes configured to output red light R, red light R, blue light B, and green light G, respectively, in a direction from the first color area Ara to the second color area Arb of the dichroic filter 420. Particularly, the four laser diodes may output three colors of light.

Meanwhile, the red light R and the red light R, which are output from the first light source device 410a in the -y axis direction, are reflected by the first color area Ara of the dichroic filter 420 and may be output in the first direction (x direction).

Meanwhile, the blue light B and the green light G, which are output from the first light source device 410a in the -y axis direction, are reflected by the second color area Arb of the dichroic filter 420 and may be output in the first direction (x direction).

The second light source device 410b may include four laser diodes configured to output green light G, blue light B, red light R, and red light R, respectively, in the x axis direction.

Specifically, the second light source device 410b may include four laser diodes configured to output green light G, blue light B, red light R, and red light R, respectively, in a direction from the first color area Ara to the second color area Arb of the dichroic filter 420. Particularly, the four laser diodes may output three colors of light.

Meanwhile, the green light G and the blue light B, which are output from the second light source device 410b in the x axis direction, are transmitted by the first color area Ara of the dichroic filter 420 and may be output in the first direction (x direction).

Meanwhile, the red light R and the red light R, which are output from the second light source device 410b in the x axis direction, are transmitted by the second color area Arb of the dichroic filter 420 and may be output in the first direction (x direction) .

To this end, the first area Ara may be a cyan area coated with cyan color, and the second color area Arb may be a red area coated with red color. Accordingly, color separation and synthesis of light from the light source device may be simplified, and high brightness performance may be achieved.

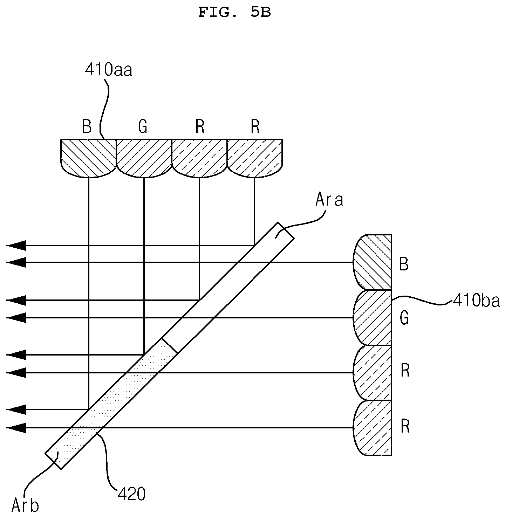

Next, FIG. 5B is a diagram illustrating another example of a first light source device 410aa and a second light source device 410ba.

Referring to FIG. 5B, the first light source device 410aa and the second light source device 410ba of FIG. 5B are similar to the first light source device 410a and the second light source device 410b of FIG. 5A, with a difference being that the arrangement of blue light B and green light G is changed.

That is, in FIG. 5A, blue light B from the first light source device 410a and blue light B from the second light source device 410b are incident in the vicinity of a boundary between the first color area Ara and the second color area Arb of the dichroic filter 420, which is different from FIG. 5B in that green light G of the first light source device 410aa and green light G of the second light source device 410ba are incident in the vicinity of a boundary between the first color area Ara and the second color area Arb of the dichroic filter 420.

That is, the first light source device 410aa may include four laser diodes configured to output red light R, red light R, green light G, and blue light B, respectively, in a direction from the first color area Ara to the second color area Arb of the dichroic filter 420. Particularly, the four laser diodes may output three colors of light.

Meanwhile, the red light R and the red light R, which are output from the first light source device 410aa in the -y axis direction, are reflected by the first color area Ara of the dichroic filter 420 and may be output in the first direction (x direction).

Meanwhile, the green light G and the blue light B, which are output from the first light source device 410aa in the -y axis direction, are reflected by the second color area Arb of the dichroic filter 420 and may be output in the first direction (x direction).

The second light source device 410ba may include four laser diodes configured to output blue light B, green light G, red light R, and red light R, respectively, in a direction from the first color area Ara to the second color area Arb of the dichroic filter 420. Particularly, the four laser diodes may output three colors of light.

Meanwhile, the blue light B and the green light G, which are output from the second light source device 410ba in the x axis direction, are transmitted by the first color area Ara of the dichroic filter 420 and may be output in the first direction (x direction).

Meanwhile, the red light R and the red light R, which are output from the second light source device 410ba in the x axis direction, are transmitted by the second color area Arb of the dichroic filter 420 and may be output in the first direction (x direction).

To this end, the first color area Ara may be a cyan area coated with cyan color, and the second color area Arb may be a red area coated with red color. Accordingly, color separation and synthesis of light from the light source device may be simplified, and high brightness performance may be achieved.

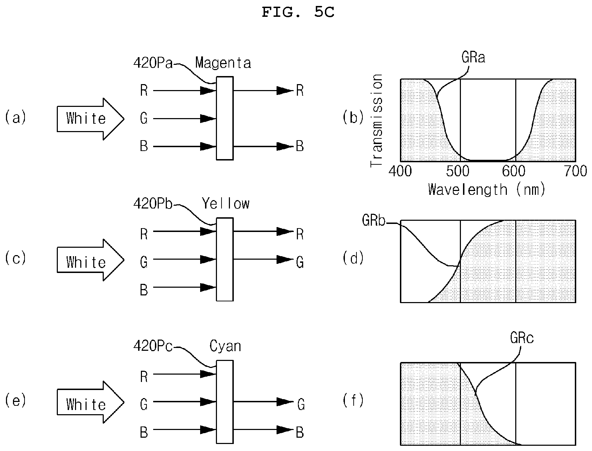

FIG. 5C is a diagram explaining various examples of a dichroic filter according to an embodiment of the present disclosure.

In the case in which the red light R, the green light G, and the blue light B are incident when a partial area 420pa of the dichroic filter 420 is coated with magenta color as illustrated in (a) of FIG. 5C, the red light R and the blue light B that are associated with magenta are transmitted, and the green light G having a complementary color relationship with magenta may be reflected, based on a frequency spectrum curve GRa of magenta coating shown in (b) of FIG. 5C.

In the case in which the red light R, the green light G, and the blue light B are incident when a partial area 420pb of the dichroic filter 420 is coated with yellow color as illustrated in (c) of FIG. 5C, the red light R and the green light G that are associated with yellow are transmitted, and the blue light B having a complementary color relationship with yellow may be reflected, based on a frequency spectrum curve GRb of yellow coating shown in (d) of FIG. 5C.

In the case in which the red light R, the green light G, and the blue light B are incident when a partial area 420pb of the dichroic filter 420 is coated with cyan color as illustrated in (e) of FIG. 5C, the blue light B and the green light G that are associated with cyan are transmitted, and the red light R having a complementary color relationship with cyan may be reflected, based on a frequency spectrum curve GRb of yellow coating shown in (f) of FIG. 5C.

That is, in the dichroic filter 420, the first color area Ara reflects a first color light, among the plurality of colors of light from the first light source device 410a, in the first direction (x direction) and the second color area Arb reflects a second color light and a third color light, among the plurality of colors of light from the first light source device 410a, in the first direction (x direction), and the second color area Arb transmits a first color light, among the plurality of colors of light from the second light source device 410b, in the first direction (x direction) and the first color area Ara transmits a second color light and a third color light, among the plurality of colors of light from the second light source device 410b, in the first direction (x direction). Accordingly, the configuration of the optical device 210 may be simplified, and high brightness performance may be achieved. In addition, color separation and synthesis of light from the light source device may be simplified, and high brightness performance may be achieved.

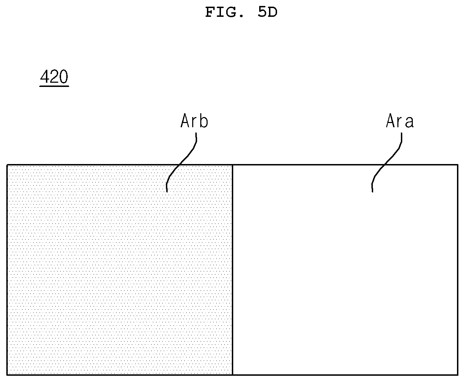

FIG. 5D is a diagram illustrating an example of a dichroic filter according to an embodiment of the present disclosure.

Referring to FIG. 5D, the first color area Ara of the dichroic filter 420 may be a cyan area, and the second color area Arb of the dichroic filter 420 may be a red area.

The first color area Ara may transmit the blue light b and the green light G and reflect the red light R, and the second color area Arb may transmit the red light R and reflect the blue light B and the green light G. Accordingly, color separation and synthesis of light from the light source device may be simplified, and high brightness performance may be achieved.

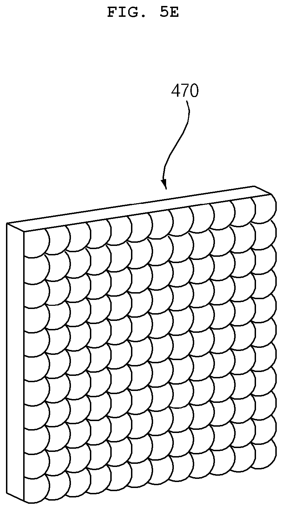

FIG. 5E is a diagram illustrating the flyeye lens 470 of FIG. 4.

Referring to FIG. 5E, the flyeye lens 470 includes a plurality of convex features, and may improve uniformity by addressing non-uniformity of light using the plurality of convex features. In addition, the entire size of the optical device 210 may be reduced, and optical efficiency may be improved.

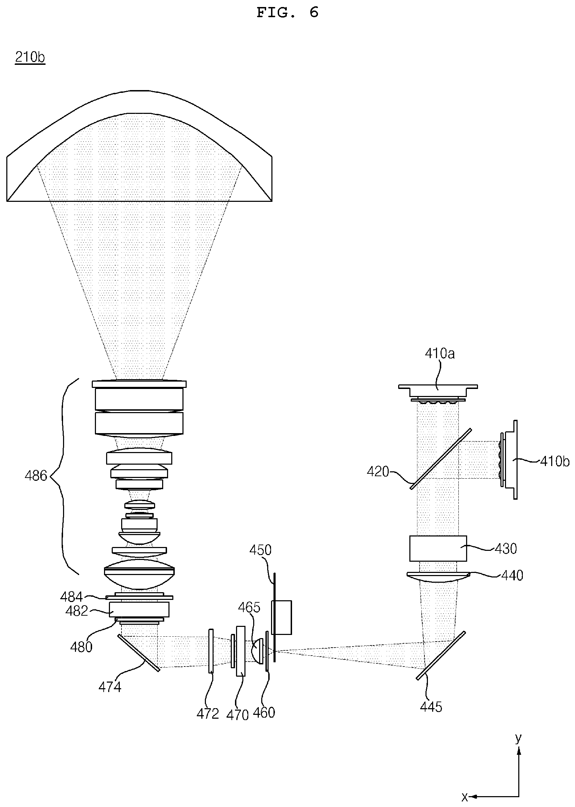

FIG. 6 is a diagram illustrating an example of a structure of an optical device according to another embodiment of the present disclosure.

Referring to FIG. 6, an optical device 210b according to another embodiment of the present disclosure is similar to the optical device 210 of FIG. 4, but is different in that the dichroic filter 420 of the optical device 210b transmits light from the first light source device 410a and reflects light from the second light source 410b.

In addition, compared to the optical device 210 of FIG. 4, the optical device 210b according to another embodiment of the present disclosure is different in that the optical device 210b further includes a reflection mirror 445 that reflects light, incident from the dichroic filter 420, in the second direction (y direction).

That is, the optical device 210b according to another embodiment of the present disclosure comprises: a first light source device 410a configured to output a plurality of colors of light in a first direction (-y direction); a second light source device 410b configured to output a plurality of colors of light in a direction intersecting the first light source device 410a; a dichroic filter 420 configured to reflect a portion of incident light and to transmit another portion of the light; a reflection mirror 445 configured to reflect light, incident from the dichroic filter 420, in a second direction (x direction); a diffusion wheel 450 configured to transmit light incident from the reflection mirror 445 upon rotation; a diffuser 460 configured to diffuse light from the diffusion wheel 450; a second reflection mirror 474 configured to reflect light from the diffuser 460 in a third direction (y direction); and a flyeye lens 470 disposed between the diffuser 460 and the second reflection mirror 474.

Meanwhile, the dichroic filter 420 includes a first color area Ara (see FIG. 5A) and a second color area Arb (see FIG. 5A), in which the first color area Ara transmits a portion of the plurality of colors of light from the first light source device 410a in the first direction (-y direction) and the second color area Arb transmits another portion of the plurality of colors of light from the first light source device 410a in the first direction (-y direction), and the second color area Arb reflects a portion of the plurality of colors of light from the second light source device 410b in the first direction (-y direction) and the first color area Ara reflects another portion of the plurality of colors of light from the second light source device 410b in the first direction (-y direction).

In the optical device 210 according to another embodiment of the present disclosure in which the plurality of color areas Ara and Arb are used, the first color area Ara transmits a portion of the plurality of colors of light from the first light source device 410a in the first direction (-y direction) and the second color area Arb transmits another portion of the plurality of colors of light from the first light source device 410a in the first direction (-y direction), and the second color area Arb reflects a portion of the plurality of colors of light from the second light source device 410b in the first direction (-y direction) and the second color area Arb reflects another portion of the plurality of colors of light from the second light source device 410b in the first direction (-y direction).

Particularly, the dichroic filter 420 according to an embodiment of the present disclosure is coated with a plurality of colors and reflects a portion of light and transmits another portion of the light, and the like by using the plurality of color areas Ara and Arb, thereby reflecting or transmitting most of the light output from the first light source device 410a and the second light source device 410b.

Particularly, the dichroic filter 420 according to an embodiment of the present disclosure does not use polarization characteristics, such that a separate retarder for polarization characteristics and the like may be omitted, thereby simplifying color separation and synthesis of light and achieving high brightness performance. In addition, the number of components in the optical device 210 may be reduced.

Meanwhile, the first light source device 410a and the second light source device 410b may include laser diodes each outputting red light, blue light, and green light.

For example, the first light source device 410a may include four laser diodes outputting red light, red light, blue light, and green light, respectively, in the first direction (-y axis direction) and the second light source device 410b may include four laser diodes outputting green light, blue light, red light, and red light, respectively, in the second direction (x axis direction).

In another example, the first light source device 410a may include four laser diodes outputting red light, red light, green light, and blue light, respectively, in the first direction (-y axis direction) and the second light source device 410b may include four laser diodes outputting blue light, green light, red light, and red light, respectively, in the second direction (x axis direction).

Meanwhile, the optical device 210b according to another embodiment of the present disclosure may further include: a condenser lens 440 disposed between the dichroic filter 420 and the diffusion wheel 450, and an illumination lens 472 disposed between the flyeye lens 470 and the second reflection mirror 474, thereby simplifying the configuration of the optical device 210 and achieving high brightness performance.

Meanwhile, the optical device 210b according to another embodiment of the present disclosure may further include a wedge prism 430 disposed between the dichroic filter 420 and the condenser lens 440, thereby simplifying the configuration of the optical device 210 and achieving high brightness performance.

Meanwhile, the optical device 210b according to another embodiment of the present disclosure may further include a collimator lens 465 disposed between the diffuser 460 and the flyeye lens 470.

Meanwhile, the optical device 210b according to another embodiment of the present disclosure may further include a digital mirror device 480 configured to output a projection image based on light from the second reflection mirror 474, and a plurality of optical lenses 486 configured to output the projection image from the digital mirror device 480. In this case, the plurality of optical lenses 486 may include a projection lens.

Meanwhile, the optical device 210b according to another embodiment of the present disclosure may further include a Total Internal Reflection (TIR) prism 482 and an actuator 484 disposed between the digital mirror device 480 and the plurality of optical lenses 486, thereby simplifying the configuration of the optical device 210 and achieving high brightness performance.

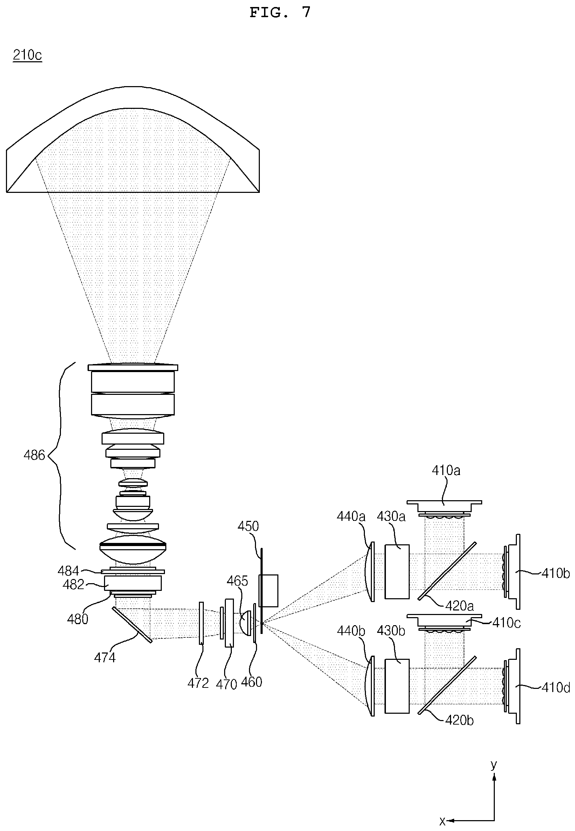

FIG. 7 is a diagram illustrating an example of a structure of an optical device according to yet another embodiment of the present disclosure.

Referring to FIG. 7, an optical device 210c according to yet another embodiment of the present disclosure is similar to the optical device 210 of FIG. 4, but is different in that the optical device 210c further includes a third light source device 410c, a fourth light source device 410d, a second dichroic filter 420b, a second condenser lens 440b, and the like.

Meanwhile, the third light source device 410c and the fourth light source device 410d may correspond to the first light source device 410a and the second light source device 410b, respectively, and the second dichroic filter 420b and the second condenser lens 440b may correspond to a first dichroic filter 420a and a first condenser lens 440a, respectively.

That is, the optical device 210c according to yet another embodiment of the present disclosure comprises: a first light source device 410a configured to output a plurality of colors of light in a -y axis direction; a second light source device 410b configured to output a plurality of colors of light in an x axis direction intersecting the first light source device 410a; a first dichroic filter 420a configured to reflect a portion of incident light and to transmit another portion of the light; a third light source device 410c configured to output a plurality of colors of light in the -y axis direction; a fourth light source device 410d configured to output a plurality of colors of light in the x axis direction intersecting the third light source device 410c; a second dichroic filter 420b configured to reflect a portion of incident light and to transmit another portion of the light; a first condenser lens 440a configured to change a path of light from the first dichroic filter 420a; a second condenser lens 440b configured to change a path of light from the second dichroic filter 420b; a diffusion wheel 450 configured to transmit light incident from the first condenser lens 440a and light incident from the second condenser lens 440b upon rotation; a diffuser 460 configured to diffuse light from the diffusion wheel 450; a reflection mirror 474 configured to reflect light from the diffuser 460 in a second direction (y direction); and a flyeye lens 470 disposed between the diffuser 460 and the reflection mirror 474.

Meanwhile, the second dichroic filter 420b according to yet another embodiment of the present disclosure comprises a third color area (not shown) and a fourth color area (not shown), in which the third color area reflects a portion of the plurality of colors of light from the third light source device 410c in a first direction (x direction) and the fourth color area Arb reflects another portion of the plurality of colors of light from the third light source device 410c in the first direction (x direction), and the fourth color area transmits a portion of the plurality of colors of light from the fourth light source device 410d in the first direction (x direction) and the third color area transmits another portion of the plurality of colors of light from the fourth light source device 410d in the first direction (x direction).

That is, the second dichroic filter 420b according to yet another embodiment of the present disclosure may operate similarly to the first dichroic filter 420a.

Meanwhile, speckle noise of light may be reduced by using the diffusion wheel 450 and the diffuser 460 in the optical device 210c according to yet another embodiment of the present disclosure.

Particularly, laser speckle noise may be reduced, which may occur when the first light source device 410a, the second light source device 410b, the third light source device 410c, and the fourth light source device 410d are laser diodes.

Meanwhile, by placing the diffusion wheel 450 and the diffuser 460 in the optical device 210 at a focal point of a lens, the size may be minimized and the effect may be maximized.

Meanwhile, the optical device 210c according to yet another embodiment of the present disclosure may further include an illumination lens 472 disposed between the flyeye lens 470 and the reflection mirror 474, thereby simplifying the configuration of the optical device 210 and achieving high brightness performance.

Meanwhile, the optical device 210c according to yet another embodiment of the present disclosure may further include a first wedge prism 430a disposed between the first dichroic filter 420a and the first condenser lens 440a, and a second wedge prism 430b disposed between the second dichroic filter 420b and the second condenser lens 440b, thereby simplifying the configuration of the optical device 210 and achieving high brightness performance.

Particularly, by refracting light using the first wedge prism 430a and the second wedge prism 430b, light is focused toward the diffusion wheel 450, thereby reducing speckle noise of light.

Meanwhile, the optical device 210c according to yet another embodiment of the present disclosure may further include a collimator lens 465 disposed between the diffuser 460 and the flyeye lens 470.

Meanwhile, by using the collimator lens 465, the first condenser lens 440a, the second condenser lens 440b, and the like in the optical device 210c according to yet another embodiment of the present disclosure, the focused light may be efficiently transmitted without loss, thereby improving light efficiency.

Meanwhile, uniformity may be improved by addressing non-uniformity of light using the flyeye lens 470 in the optical device 210c according to yet another embodiment of the present disclosure. In addition, the entire size of the optical device 210 may be reduced, and optical efficiency may be improved.

Meanwhile, the optical device 210c according to yet another embodiment of the present disclosure may further include a digital mirror device 480 configured to output a projection image based on light from the second reflection mirror 474, and a plurality of optical lenses 486 configured to output the projection image from the digital mirror device 480. In this case, the plurality of optical lenses 486 may include a projection lens.

Meanwhile, the optical device 210c according to yet another embodiment of the present disclosure may further include a Total Internal Reflection (TIR) prism 482 and an actuator 484 disposed between the digital mirror device 480 and the plurality of optical lenses 486, thereby simplifying the configuration of the optical device 210 and achieving high brightness performance.

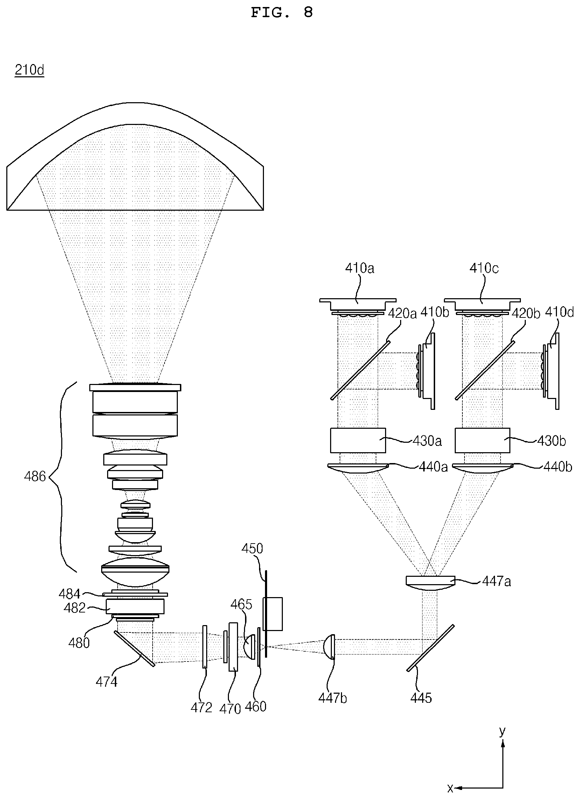

FIG. 8 is a diagram illustrating an example of a structure of an optical device according to yet another embodiment of the present disclosure.

Referring to FIG. 8, an optical device 210d according to yet another embodiment of the present disclosure is similar to the optical device 210b of FIG. 6, but is different in that the optical device 210d further includes a third light source device 410c, a fourth light source device 410d, a second dichroic filter 420b, a second condenser lens 440b, and the like.

Meanwhile, the third light source device 410c and the fourth light source device 410d may correspond to the first light source device 410a and the second light source device 410b, respectively, and the second dichroic filter 420b and the second condenser lens 440b may correspond to the first dichroic filter 420a and the condenser lens 440a, respectively.

That is, the optical device 210d according to yet another embodiment of the present disclosure comprises: a first light source device 410a configured to output a plurality of colors of light in a first direction (-y axis direction); a second light source device 410b configured to output a plurality of colors of light in a second direction (x axis direction) intersecting the first light source device 410a; a first dichroic filter 420a configured to reflect a portion of incident light and to transmit another portion of the light; a third light source device 410c configured to output a plurality of colors of light in the first direction (-y axis direction); a fourth light source device 410d configured to output a plurality of colors of light in the second direction (x axis direction) intersecting the third light source device 410c; and a second dichroic filter 420b configured to reflect a portion of incident light and to transmit another portion of the light.

Meanwhile, the optical device 210d according to yet another embodiment of the present disclosure comprises: a first condenser lens 440a configured to change a path of light from the first dichroic filter 420a; a second condenser lens 440b configured to change a path of light from the second dichroic filter 420b; a third condenser lens 447a configured to change a path of light from the first condenser lens 440a and a path of light from the second condenser lens 440b; a reflection mirror 445 configured to reflect light, incident from the third condenser lens 447a, in a second direction (x direction); a diffusion wheel 450 configured to transmit light incident from the reflection mirror 445 upon rotation; a diffuser 460 configured to diffuse light from the diffusion wheel 450; a second reflection mirror 474 configured to reflect light from the diffuser 460 in a third direction (y direction); and a flyeye lens 470 disposed between the diffuser 460 and the second reflection mirror 474.

Meanwhile, the second dichroic filter 420b according to yet another embodiment of the present disclosure comprises a third color area (not shown) and a fourth color area (not shown), in which the third color area reflects a portion of the plurality of colors of light from the third light source device 410c in the first direction (-y axis direction) and the fourth color area reflects another portion of the plurality of colors of light from the third light source device 410c in the first direction (-y axis direction), and the fourth color area transmits a portion of the plurality of colors of light from the fourth light source device 410d in the first direction (-y axis direction) and the third color area transmits another portion of the plurality of colors of light from the fourth light source device 410d in the first direction (-y axis direction).

That is, the second dichroic filter 420b according to yet another embodiment of the present disclosure may operate similarly to the first dichroic filter 420a.

Referring to the drawing, the second light source device 410b and the fourth light source device 410d may output light in the same direction which is the second direction (x axis direction)

Meanwhile, the optical device 210d according to yet another embodiment of the present disclosure may further include an illumination lens 472 disposed between the flyeye lens 470 and the reflection mirror 474, thereby simplifying the configuration of the optical device 210 and achieving high brightness performance.

Meanwhile, the optical device 210d according to yet another embodiment of the present disclosure may further include a fourth condenser lens 447b disposed between the reflection mirror 445 and the diffusion wheel 450.

Meanwhile, the third condenser lens 447a and the fourth condenser lens 447b may be referred to as a first relay lens and a second relay lens, respectively.

Meanwhile, the optical device 210d according to yet another embodiment of the present disclosure may further include a first wedge prism 430a disposed between the first dichroic filter 420a and the first condenser lens 440a, and a second wedge prism 430b disposed between the second dichroic filter 420b and the second condenser lens 440b, thereby simplifying the configuration of the optical device 210 and achieving high brightness performance.

Meanwhile, the optical device 210d according to yet another embodiment of the present disclosure may further include a collimator lens 465 disposed between the diffuser 460 and the flyeye lens 470.

Meanwhile, the optical device 210d according to yet another embodiment of the present disclosure may further include a digital mirror device 480 configured to output a projection image based on light from the second reflection mirror 474, and a plurality of optical lenses 486 configured to output the projection image from the digital mirror device 480. In this case, the plurality of optical lenses 486 may include a projection lens.

Meanwhile, the optical device 210d according to yet another embodiment of the present disclosure may further include a Total Internal Reflection (TIR) prism 482 and an actuator 484 disposed between the digital mirror device 480 and the plurality of optical lenses 486, thereby simplifying the configuration of the optical device 210 and achieving high brightness performance.

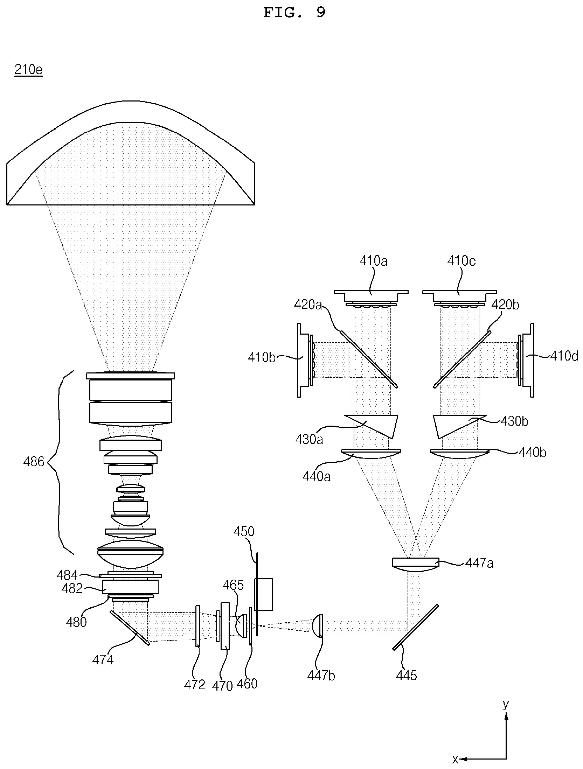

FIG. 9 is a diagram illustrating an example of a structure of an optical device according to yet another embodiment of the present disclosure.

Referring to FIG. 9, an optical device 210e according to yet another embodiment of the present disclosure has the same internal configuration as the optical device 210d of FIG. 8, but is different in that the second light source device 410b and the fourth light source device 410d output light in opposite directions.

That is, the second light source device 410b outputs light in the -x axis direction, and the fourth light source device 410d outputs light in the x axis direction.

The optical device and the image projection apparatus including the same according to the embodiments of the present disclosure as described above are not limited in its application of the configurations and methods, but the entirety or a portion of the embodiments can be selectively combined to be configured into various modifications.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. An optical device comprising:
a dichroic filter including a first color area and a second color area, the first color area configured to reflect a portion of a plurality of colors of light from a first light source device in a first direction and the second color area configured to reflect another portion of the plurality of colors of light from the first light source device in the first direction, and the second color area configured to transmit a portion of a plurality of colors of light from a second light device in the first direction and the first color area configured to transmit another portion of the plurality of colors of light from the second light device in the first direction;
a diffusion wheel configured to transmit light incident from the dichroic filter upon rotation;
a diffuser configured to diffuse light from the diffusion wheel;
a reflection mirror configured to reflect light from the diffuser in a second direction; and
a flyeye lens disposed between the diffuser and the reflection mirror.

2. The optical device of claim 1, wherein in the dichroic filter, the first color area is configured to reflect a first color light, among the plurality of colors of light from the first light source device, in the first direction and the second color area is configured to reflect a second color light and a third color light, among the plurality of colors of light from the first light source device, in the first direction, and the second color area is configured to transmit a first color light, among the plurality of colors of light from the second light source device, in the first direction and the first color area is configured to transmit a second color light and a third color light, among the plurality of colors of light from the second light source device, in the first direction.

3. The optical device of claim 1, wherein in the dichroic filter, the first color area is configured to reflect red light from the first light source device in the first direction and the second color area is configured to reflect blue light and green light from the first light source device in the first direction, and the second color area is configured to transmit red light from the second light source device in the first direction and the first color area is configured to transmit blue light and green light from the second light source device in the first direction.

4. The optical device of claim 1, wherein the red light, blue light, and green light from the first light source device are output and the green light, blue light, and red light from the second light source device are output, in a direction from the first color area to the second color area of the dichroic filter.

5. The optical device of claim 1, wherein the red light, green light, and blue light from the first light source device are output and the blue light, green light, and red light from the second light source device are output, in a direction from the first color area to the second color area of the dichroic filter.

6. The optical device of any one of claims 3 to 5, wherein the first color area is a cyan area, and the second color area is a red area.

7. The optical device of claim 1, further comprising:
a digital mirror device configured to output a projection image based on light from the reflection mirror; and
a plurality of optical lenses configured to output the projection image from the digital mirror device.

8. The optical device of claim 1, further comprising a Total Internal Reflection (TIR) prism and an actuator disposed between the digital mirror device and the plurality of optical lenses.

9. The optical device of claim 1, further comprising:
a condenser lens disposed between the dichroic filter and the diffusion wheel; and
an illumination lens disposed between the flyeye lens and the reflection mirror.

10. The optical device of claim 9, further comprising a wedge prism disposed between the dichroic filter and the condenser lens.

11. An optical device comprising:
a second dichroic filter including a third color area and a fourth color area, the third color area configured to reflect a portion of a plurality of colors of light from a third light source device in a first direction and the fourth color area configured to reflect another portion of the plurality of colors of light in the first direction, and the fourth color area configured to transmit a portion of a plurality of colors of light from a fourth light source device in the first direction and the third color area configured to transmit another portion of the plurality of colors of light in the first direction;
a first condenser lens configured to change a path of light from the dichroic filter;
a second condenser lens configured to change a path of light from the second dichroic filter,
wherein a diffusion wheel is configured to transmit light incident from the first condenser lens and light incident from the second condenser lens upon rotation.

12. The optical device of claim 11, further comprising:
a first wedge prism disposed between the dichroic filter and the first condenser lens;
a second wedge prism disposed between the second dichroic filter and the second condenser lens; and
an illumination lens disposed between a flyeye lens and a reflection mirror.

13. An optical device comprising:
a dichroic filter including a first color area and a second color area, the first color area configured to transmit a portion of a plurality of colors of light from a first light source device in a first direction and the second color area configured to transmit another portion of the plurality of colors of light in the first direction, and the second color area configured to reflect a portion of a plurality of colors of light from a second light device in the first direction and the first color area configured to reflect another portion of the plurality of colors of light in the first direction;
a reflection mirror configured to reflect light incident from the dichroic filter in a second direction;
a diffusion wheel configured to transmit light incident from the reflection mirror upon rotation;
a diffuser configured to diffuse light from the diffusion wheel;
a second reflection mirror configured to reflect light from the diffuser in a third direction opposite the first direction; and
a flyeye lens disposed between the diffuser and the second reflection mirror.

14. The optical device of claim 13, further comprising:
a digital mirror device configured to output a projection image based on light from the second reflection mirror; and
a plurality of optical lenses configured to output the projection image from the digital mirror device.

15. The optical device of claim 13, further comprising a Total Internal Reflection (TIR) prism and an actuator disposed between the digital mirror device and the plurality of optical lenses.

16. The optical device of claim 13, further comprising:
a condenser lens disposed between the dichroic filter and the diffusion wheel; and
an illumination lens disposed between the flyeye lens and the second reflection mirror.

17. The optical device of claim 13, further comprising:
a second dichroic filter including a third color area and a fourth color area, the third color area configured to transmit a portion of a plurality of colors of light from a third light source device in a first direction and the fourth color area configured to transmit another portion of the plurality of colors of light in the first direction, and the fourth color area configured to reflect a portion of a plurality of colors of light from a fourth light source device in the first direction and the third color area configured to reflect another portion of the plurality of colors of light in the first direction;
a first condenser lens configured to change a path of light from the dichroic filter;
a second condenser lens configured to change a path of light from the second dichroic filter; and
a third condenser lens configured to change a path of light from the first condenser lens and a path of light from the second condenser lens,
wherein the reflection mirror is configured to reflect light, incident from the third condenser lens, in a second direction.

18. The optical device of claim 17, wherein the second light source device and the fourth light source device are configured to output light in a same direction.

19. The optical device of claim 17, wherein the second light source device and the fourth light source device are configured to output light in opposite directions.

20. An image projection apparatus comprising the optical device of any one of claims 1 to 19.
